# EUROPÄISCHE PATENTANMELDUNG

(11) **EP 4 843 754 A1**
(43) Veröffentlichungstag der Anmeldung: **25.11.2026**
(21) Anmeldenummer: 25177160.6
(22) Anmeldetag: 19.05.2025
(51) Int. Cl.: B29C 65/18, B29C 65/78

(54) **VERPACKUNGSMASCHINE**

(71) Anmelder: GK Sondermaschinenbau GmbH, 01477 Arnsdorf (DE)
(72) Erfinder: HEINRICH, Ralph, 01477 Arnsdorf (DE); TANNEBERGER, Enrico, 01477 Arnsdorf (DE)
(74) Vertreter: Kailuweit & Uhlemann Patentanwälte Partnerschaft mbB

(57) **Zusammenfassung**

Die Erfindung betrifft eine Vorrichtung und ein Verfahren zur Versiegelung von Verpackungsmaterialien umfassend eine Siegeleinheit zur Durchführung des Verschweißens unter einem Siegeldruck, wobei die Siegeleinheit ein Kniehebelsystem (4, 5, 6) umfassend mindestens eine Antriebseinheit (1), mindestens eine Schlitteneinheit (4), mindestens ein Hydrauliksystem (5), mindestens einen Siegelhebel (6), sowie ein Gegenstück (7) aufweist.

Die Siegeleinheit ist derart ausgestaltet, dass die Antriebseinheit (1) mit der Schlitteneinheit (4) derart verbunden ist, dass die Schlitteneinheit eine reversierende Linearbewegung ausführt und die Schlitteneinheit (4) mit dem Siegelhebel (6) über das Hydrauliksystem (5) derart verbunden ist, dass eine Linearbewegung eines Siegelwerkzeugs (9), welches am Siegelhebel (6) angeordnet ist, erzeugt wird, wobei ein Siegeldruck durch die definierten Bewegungen des Siegelhebels (6) gegen das Gegenstück (7) erzeugt wird.

Die Siegeltemperatur und/oder die Siegelzeit und/oder der Siegeldruck sind einstellbar.

## Beschreibung

Die Erfindung betrifft eine Verpackungsmaschine, die sowohl feuchte als auch trockene Produkte verarbeiten und in versiegelten Beuteln verpacken kann. Die Maschine umfasst eine modulare Bauweise, die eine einfache Umstellung zwischen den verschiedenen Produkttypen ermöglicht, sowie spezielle Dicht- und Versiegelungseinrichtungen, die eine zuverlässige Verpackung gewährleisten.

Für die Versiegelung von Verpackungen werden eine Vielzahl von Verpackungsmaschinen eingesetzt. Bisherige Maschinen arbeiten für die Versiegelung mit höheren Temperaturen um die erforderliche Dichtigkeit, insbesondere bei feuchten Erzeugnissen zu garantieren. Der Einsatz von höheren Temperaturen während der Versiegelung erweist sich jedoch als nachteilig, wenn recycelten oder kompostierbare Folien eingesetzt werden sollen, da diese sehr temperaturempfindlich sind und deswegen leicht unter einem erhöhten Temperatureinfluss zerstört werden können.

Eine Siegelrandbeutelmaschine produziert vierseitig versiegelte Beutel, auch Flachbeutel oder Kissenbeutel genannt, die größere Volumina und verschiedene Formen haben können. Die Maschine beginnt mit einer flachen Folienbahn, die kontinuierlich oder intermittierend durch die Maschine geführt wird. Diese Folienbahn wird mittig geteilt, beide Streifen zueinander umgelenkt, an allen vier Rändern versiegelt und befüllt. Dabei kommen Heizleisten oder Heißsiegelwerkzeuge zum Einsatz. Nach dem Versiegeln werden die Beutel geschnitten und aus der Maschine entnommen. Siegelrandbeutelmaschinen finden weit verbreitet Anwendung in der Lebensmittel-, Pharma- und Chemieindustrie zur Verpackung von Pulvern, Granulaten, Flüssigkeiten und Pasten.

Maßgeblich für die Dichtigkeit und die Qualität der Siegelnähte sind dabei die Parameter Druck, Temperatur und Wirkzeit auf die Naht. Für die erfolgreiche Umsetzung dieser Parameter verwenden die Maschinen eine Vielzahl von verschiedenen technischen Systemen. So finden etwa zur Einbringung der notwendigen Temperatur elektromagnetische Strahlung Anwendung. So kann die Temperatur verschleißarm und an den notwendigen Stellen in das Material eingebracht werden.

So offenbart die Patentanmeldung EP0773164A1 eine Maschine wonach die zu versiegelten Folien mittels elektromagnetischer Strahlung vorgeheizt werden und so einfacher und schneller versiegelt werden können. Die Folien werden an den zu versiegelten Seiten vorgewärmt und anschließend durch Rollen gezogen, um diese endgültig zu versiegeln. Der Einsatz von Wärme ist hier essenziell wichtig für das Versiegeln der Materialien. Weiter können in EP3459867A2 offenbart Längs- und Querversiegelten Folienbeutel heiß versiegelt werden, dafür werden vorgewärmte Siegelbacken auf die Folienränder gepresst. Die Einbringung der Wärme kann entweder über Ultraschall, Heißstempel oder elektrischer Energie erfolgen.

Für die Aufbringung des notwendigen Versiegelung-Druckes werden mittels Aktuatoren bevorzugt Schieber- und Kniehebelsysteme, sowie Formklappen, Backen oder komplexe Bewegungssysteme eingesetzt.

Das Patent DE2656219B1 kombiniert ein Kniehebelsystem in Kombination mit einem Schieber. Die Aufbringung der Schließkraft erfolgt hier in erster Linie über den Schiebermechanismus. Der Kniehebel ist über ein Kniehebelgetriebe mit einer Stellstange verbunden, welche mit der für den Hauptantrieb verantwortlichen Hauptwelle verbunden ist.

Weiter wird in EP3838769A1 ein Kniehebelsystem als Hubwerk verwendet. Dieses besteht aus einem Oberwerkzeug und einem Unterwerkzeug, wobei das Unterwerkzeug in vertikaler Richtung zum Oberwerkzeug hin beweglich ist. Für die Versiegelung wird das Unterwerkzeug zum Oberwerkzeug hin angehoben. Für die Bewegung des Unterwerkzeuges werden jedoch zwei Aktuatoren benötigt, welche zum einen ungünstige Übersetzungsverhältnisse überwinden und zum anderen dann über den Kniehebelmechanismus für das Anheben des Werkzeuges verantwortlich sind.

Backen und Formklappen wird in der Offenlegung DE60307473T2 verwendet. Die Bewegung der Backen wird über vertikale Stäbe, Drehnocken oder Servomotoren gesteuert. Für die Bewegung der Formklappen ist eine ortsfeste Nocken-Vorrichtung verantwortlich. Die Nockenprofile definieren die Bewegung der Formklappen, um die Form und Versiegelung der Verpackungen zu kontrollieren. Ähnlich wird die Bewegung der Klappen in EP1101700A1 realisiert.

Komplexere Schließwerkzeuge werden in der Patentanmeldung EP2853498A1 offengelegt. Hier werden zwei Bewegungssysteme, welche durch separate Motoren angetrieben werden und mindestens einen gelenkigen Arm, der die Siegeleinheiten relativ zueinander und zum Rahmen bewegt. Fokus der Erfindung ist die Beweglichkeit und die Flexibilität der Siegeleinheiten.

Die ordentliche Versiegelung von besonders Temperaturempfindlichen Verpackungsmaterialien muss für die Zukunft garantiert werden. Bislang werden vorzugsweise Kunststofffolien aus Primär-Kunststoff verwendet, welche eine höhere Schmelztemperatur gegenüber recycelten oder kompostierbaren Verpackungsmaterialien aufweisen. Neue und nachhaltigere Verpackungsmaterialien müssen daher mit alternativen Versiegelungsvorrichtungen und - verfahren realisiert werden.

Aufgabe ist es daher, eine Vorrichtung bereitzustellen, welches die Nachteile des Standes der Technik überwindet.

Recycelte oder kompostierbare Verpackungsmaterialien sind für die zum Teil sehr hohen Temperaturen während der Versiegelung nicht ausgelegt und können dabei stark beschädigt werden. Aus Gründen der Nachhaltigkeit sollen aber gerade solche Materialien vermehrt in der Verpackungsindustrie eingesetzt werden.

Die vorliegende Erfindung soll dafür mit sehr hohem Drücken, kurzer Taktzeit und einer moderaten Temperatur gewährleisten, dass für die Zukunft auch Verpackungen aus recycelten oder kompostierbaren Materialien gut und sicher versiegelt werden können. Dies soll mit einem besonderen Kniehebelsystem realisiert werden, welches einen besonderen Fokus auf eine effiziente Kraftübertragung legt.

Ein erster Aspekt der Erfindung betrifft eine Vorrichtung zur Verschweißung von Packstoffseiten einer Verpackung umfassend eine Siegeleinheit zur Durchführung des Verschweißens unter einem Siegeldruck, wobei die Siegeleinheit ein Kniehebelsystem umfassend
- mindestens eine Antriebseinheit,
- mindestens eine Schlitteneinheit,
- mindestens ein Hydrauliksystem,
- mindestens einen Siegelhebel,
- sowie ein Gegenstück aufweist,
wobei die Siegeleinheit derart ausgestaltet ist, dass die Antriebseinheit mit der Schlitteneinheit derart verbunden ist, dass die Schlitteneinheit eine reversierende Linearbewegung ausführt und die Schlitteneinheit mit dem Siegelhebel über das Hydrauliksystem derart verbunden ist, dass eine Linearbewegung eines Siegelwerkzeugs, welches am Siegelhebel angeordnet ist, erzeugt wird, wobei ein Siegeldruck durch die definierten Bewegungen des Siegelhebels gegen das Gegenstück erzeugt wird, dadurch gekennzeichnet, dass die Siegeltemperatur und/oder die Siegelzeit und/oder der Siegeldruck derart einstellbar sind, dass die strukturelle Integrität der Packstoffe aufrechterhalten wird.

Die Antriebseinheit des Siegelhebelantriebs ist so gestaltet, dass ein Servomotor mit einem Getriebe an der Antriebsseite eine reversierende Schwenkbewegung erzeugt. Diese Bewegung wird durch eine Kurbel ausgeführt, die über eine Koppel mit einem Schlitten verbunden ist. Der Schlitten führt dabei eine reversierende Linearbewegung aus und ist hauptverantwortlich für die Aufbringung der Druckkraft.

Am Schlitten sind Zylinder befestigt, die die Verbindung zwischen dem Schlitten und den Siegelhebeln herstellen. Die Siegelhebel sind schwenkbar in einer Konsole gelagert, wobei die Zylinder eine dämpfende Funktion besitzen und die aufzubringende Druckkraft regeln. Diese Schwenkbewegung wird aufgrund des Hebelverhältnisses L1/L2 an der Anlenkung des Siegelwerkzeugs (SWZ) in eine quasi lineare Bewegung umgewandelt, die für die Aufnahme der SWZ verwendet wird.

Die Funktionsweise basiert auf dem Kniehebelprinzip, bei dem die reversierende Linearbewegung des Schlittens über die Zylinder auf die Siegelhebel übertragen wird. Entsprechend dem Hebelgesetz wird ein großer Hubweg mit geringer Zug- oder Druckkraft in einen kleinen Hub mit hoher Kraft umgesetzt. Das besondere Merkmal dieser Anordnung liegt in der kontinuierlichen Veränderung des Übersetzungsverhältnisses zwischen der aufgewendeten und der resultierenden Kraft während der Bewegung des Schlittens. Je näher sich die Zylinder der Strecklage des Kniehebels nähern, desto geringer wird die Kraft, die über Kurbel und Koppel auf den Schlitten ausgeübt werden muss.

Im gebeugten Zustand bewirkt der Kniehebel eine hohe Wegübersetzung bei geringer Kraftübersetzung. Mit Annäherung an die gestreckte Position nimmt die Hubgeschwindigkeit bei gleichbleibender Betätigungsgeschwindigkeit ab, wobei diese Geschwindigkeitsveränderung durch die sinusförmige Bewegung der Kurbel überlagert wird. Gleichzeitig steigt die Presskraft an, wobei sie im theoretischen Endpunkt gegen unendlich geht.

Diese Eigenschaft des Kniehebels wird im Siegelprozess gezielt eingesetzt. Die Siegelwerkzeuge werden zunächst mit hoher Geschwindigkeit an die Folie herangeführt, um den Siegelvorgang im Produktionsprozess schließlich mit geringer Geschwindigkeit, kurzem Hub und sehr hohem Druck auszuführen.

Erfindungsgemäß umfasst die Vorrichtung zur Verschweißung von Packstoffseiten einer Verpackung eine Siegeleinheit zur Durchführung des Verschweißens unter einem Siegeldruck, wobei die Siegeleinheit ein Kniehebelsystem aufweist.

Ein Kniehebelsystem ist ein mechanisches System, das Hebelkräfte mithilfe eines Gelenks (dem sogenannten "Knie") verstärkt oder überträgt. Es basiert auf der Kombination von zwei Hebeln, die durch ein gelenkiges Verbindungselement miteinander verbunden sind. Das System wandelt eine Eingangskraft in eine erhöhte Ausgangskraft oder Bewegung um und wird zur Kraftverstärkung, Bewegungskontrolle oder Fixierung verwendet.

Ein Kniehebelsystem umfasst eine mechanische Vorrichtung zur Kraftübertragung und - verstärkung, die durch die Kombination von mindestens zwei Hebelarmen realisiert wird, welche über ein gelenkiges Verbindungselement miteinander verbunden sind. Das System weist einen ersten Hebelarm auf, der an einem festen Punkt drehbar gelagert ist und zur Aufnahme einer Eingangskraft dient. Ein zweiter Hebelarm ist mit dem ersten Hebelarm über ein Kniegelenk verbunden und beweglich gelagert, wobei dieser zweite Hebelarm dazu ausgelegt ist, eine verstärkte Ausgangskraft oder Bewegung zu übertragen.

Das Kniegelenk bildet einen zentralen Drehpunkt, an dem die Hebelarme relativ zueinander beweglich sind. Durch eine gezielte Bewegung der Hebelarme wird das System entweder in eine nahezu gestreckte Position gebracht, um eine erhebliche Kraftverstärkung zu erzielen. Mindestens ein Hebelarm ist an einer festen Lagerung drehbar gelagert, um die Kinematik des Systems zu definieren und eine stabile Kraftübertragung zu gewährleisten.

Das Kniehebelsystem zeichnet sich dadurch aus, dass die Anordnung der Hebelarme und des Kniegelenks eine effiziente Kraftübersetzung ermöglicht, insbesondere bei geringerem Kraftaufwand. Dadurch kann das System hohe Kräfte aufbringen.

In einer bevorzugten Ausführungsform kann das Kniehebelsystem zusätzliche Führungselemente, wie Schlitten oder Führungsschienen, umfassen, um die Bewegung der Hebelarme zu stabilisieren und eine wiederholgenaue Funktion sicherzustellen.

Erfindungsgemäß umfasst das Kniehebelsystem mindestens eine Antriebseinheit.

Die Antriebseinheit besteht aus einem Servomotor, der über ein Getriebe an der Abtriebsseite eine reversierende Schwenkbewegung erzeugt. Diese Bewegung wird durch eine Kurbel umgesetzt, die an der Abtriebsseite des Motors angebracht ist. Die Kurbel ist über eine Koppel mit dem Schlitten verbunden und dient dazu, die rotierende Bewegung des Motors in eine Linearbewegung des Schlittens umzuwandeln.

Durch diese Konstruktion wird eine präzise Steuerung der Linearbewegung ermöglicht, welche die Basis für die weitere Funktion des Systems bildet. Die Antriebseinheit ist somit der Ausgangspunkt für die Übertragung von Bewegung und Kraft innerhalb des gesamten Siegelhebelantriebs.

Erfindungsgemäß umfasst das Kniehebelsystem mindestens eine Schlitteneinheit.

Die Schlitteneinheit bildet eine zentrale Komponente des Siegelhebelantriebs und ist für die Übertragung der Bewegung sowie der Kraft verantwortlich. Sie führt eine reversierende Linearbewegung aus, die durch die Verbindung mit einer Kurbel und einer Koppel erzeugt wird.

Am Schlitten sind Zylinder befestigt, die die Bewegung und Kraft der Schlitteneinheit auf die Siegelhebel übertragen. Diese Zylinder stellen sicher, dass die durch die Linearbewegung des Schlittens erzeugte Energie präzise in eine Schwenkbewegung der Siegelhebel umgesetzt wird.

Die Schlitteneinheit ist darauf ausgelegt, die sinusförmige Bewegung der Kurbel in eine gleichmäßige und kontrollierte Linearbewegung umzuwandeln. Diese Linearbewegung ist entscheidend für die exakte Steuerung des Kniehebelmechanismus, der wiederum die gewünschte Presskraft und Hubbewegung der Siegelwerkzeuge ermöglicht.

Die Schlitteneinheit ist somit die Schnittstelle zwischen der durch die Kurbel erzeugten Schwenkbewegung und der am Siegelhebel benötigten präzisen Kraft- und Bewegungsübertragung.

Erfindungsgemäß umfasst das Kniehebelsystem mindestens eine Hydrauliksystem.

Die Hydraulikeinheit besteht u.a. aus Zylindern, die an der Schlitteneinheit befestigt sind. Diese Zylinder dienen als Aktoren und übertragen die von der Schlitteneinheit ausgeführte reversierende Linearbewegung direkt auf die Siegelhebel.

Durch die Betätigung der Hydraulikeinheit wird eine Schwenkbewegung der Siegelhebel erzeugt. Diese Bewegung wird über das Hebelverhältnis L1/L2 so umgewandelt, dass an der Anlenkung des Siegelwerkzeugs (SWZ) eine quasi lineare Bewegung für die Aufnahme der Siegelwerkzeuge entsteht.

Die Hydraulikeinheit ist so ausgelegt, dass sie während des Siegelvorgangs die notwendige Präzision und Kraft bereitstellt, wobei sie die spezifischen Vorteile des Kniehebelprinzips nutzt. Dies ermöglicht eine schnelle Annäherung der Siegelwerkzeuge an die Folie sowie eine langsame, kraftvolle Bewegung für den eigentlichen Siegelprozess.

Erfindungsgemäß umfasst das Kniehebelsystem mindestens eine Siegelhebel.

Der Siegelhebel ist schwenkbar an einer Konsole gelagert und dient als wesentliche Übertragungselemente innerhalb des Siegelhebelantriebs. Er erhält seine Bewegung und Kraft über die Zylinder, die durch die Linearbewegung der Schlitteneinheit angesteuert wird.

Der Siegelhebel führt eine Schwenkbewegung aus, die aufgrund des Hebelverhältnisses L1/L2 in eine kurze, kraftvolle Linearbewegung an der Anlenkung des Siegelwerkzeugs (SWZ) umgewandelt wird. Diese Linearbewegung ist entscheidend für die präzise und kraftvolle Betätigung der Siegelwerkzeuge.

Ein besonderes Merkmal der Siegelhebel ist ihre Integration in das Kniehebelprinzip, wodurch eine kontinuierliche Veränderung des Übersetzungsverhältnisses während der Bewegung erreicht wird. Dies ermöglicht eine schnelle Annäherung der Siegelwerkzeuge bei geringer Kraft und eine hohe Presskraft im Endpunkt des Bewegungsablaufs, was für den Siegelvorgang essenziell ist.

Erfindungsgemäß umfasst das Kniehebelsystem ein Gegenstück.

Das Gegenstück ist die feste oder bewegliche Komponente, die dem Siegelhebel gegenüberliegt und als Auflagefläche für die Siegelwerkzeuge dient. Es ist so gestaltet, dass es die erforderliche Stabilität und Präzision bietet, um die während des Siegelvorgangs entstehenden Kräfte aufzunehmen.

Das Gegenstück ist in der Regel fest in der Konsole integriert oder so gelagert, dass es eine optimale Positionierung der Folie ermöglicht. Es gewährleistet, dass die Siegelwerkzeuge beim Schließen eine gleichmäßige Druckverteilung auf die Folie ausüben und so eine zuverlässige Versiegelung erreicht wird.

Seine Oberfläche und Konstruktion sind darauf ausgelegt, die thermischen und mechanischen Anforderungen des Siegelprozesses zu erfüllen, indem es die benötigte Stabilität für den hohen Pressdruck und die präzise Hubbewegung bietet.

Erfindungsgemäß ist die Siegeleinheit derart ausgestaltet, dass die Antriebseinheit mit der Schlitteneinheit derart verbunden ist, dass die Schlitteneinheit eine reversierende Linearbewegung ausführt und die Schlitteneinheit mit dem Siegelhebel über das Hydrauliksystem derart verbunden ist, dass eine Linearbewegung eines Siegelwerkzeugs, welches am Siegelhebel angeordnet ist, erzeugt wird, wobei ein Siegeldruck durch die definierten Bewegungen des Siegelhebels gegen das Gegenstück erzeugt wird.

Dabei ist die Siegeleinheit so ausgestaltet, dass eine präzise und effiziente Übertragung von Bewegung und Kraft gewährleistet ist. Die Antriebseinheit ist direkt mit der Schlitteneinheit gekoppelt, wodurch die Schlitteneinheit eine definierte reversierende Linearbewegung ausführt. Diese Linearbewegung wird über das Hydrauliksystem auf den Siegelhebel übertragen.

Der Siegelhebel ist so mit der Schlitteneinheit verbunden, dass die Bewegung des Schlittens in eine kontrollierte Schwenkbewegung des Siegelhebels umgesetzt wird. An dem Siegelhebel ist ein Siegelwerkzeug angeordnet, das durch die Linearbewegung des Schlittens und die Schwenkbewegung des Hebels eine lineare Bewegung ausführt.

Durch diese Anordnung wird ein definierter Siegeldruck erzeugt, der es ermöglicht, das Siegelwerkzeug gegen das Gegenstück zu pressen. Die genaue Abstimmung der Bewegungsabläufe zwischen Antriebseinheit, Schlitteneinheit, Hydrauliksystem und Siegelhebel gewährleistet eine präzise und wiederholbare Ausführung des Siegelvorgangs mit hoher Kraft und Effizienz.

Erfindungsgemäß ist die Siegeleinheit derart ausgestaltet, dass die Siegeltemperatur und/oder die Siegelzeit und/oder der Siegeldruck derart einstellbar sind, dass die strukturelle Integrität der Packstoffe aufrechterhalten wird.

In Ausführungsformen der Erfindung ist die Siegeleinheit so ausgestaltet, dass die wesentlichen Siegelparameter, nämlich die Siegeltemperatur, die Siegelzeit und der Siegeldruck, individuell und präzise einstellbar sind. Die Siegeltemperatur wird so geregelt, dass die thermoplastischen Eigenschaften der verwendeten Packstoffe optimal genutzt werden, ohne deren strukturelle Integrität zu beeinträchtigen. Dadurch wird ein Überhitzen oder Schmelzen des Materials vermieden, das die Funktionalität der Verpackung gefährden könnte. Die Siegelzeit, also die Dauer, während der das Siegelwerkzeug auf das Material einwirkt, ist ebenfalls anpassbar, sodass eine sichere und zuverlässige Versiegelung gewährleistet wird, ohne die Materialien durch übermäßige Einwirkzeiten zu beschädigen. Zudem ist der Siegeldruck so einstellbar, dass er an die spezifischen Anforderungen der Packstoffe angepasst werden kann. Dies stellt sicher, dass die Versiegelung stabil und gleichmäßig erfolgt, ohne das Material mechanisch zu belasten oder zu verformen. Insgesamt wird durch die präzise Einstellung dieser Parameter eine zuverlässige Versiegelung erzielt, während die strukturelle Integrität der Packstoffe erhalten bleibt. Dies erlaubt eine flexible Anpassung der Siegeleinheit an unterschiedliche Materialeigenschaften und Verpackungsanforderungen.

In Ausführungsformen ist das Gegenstück als Siegelhebel ausgeführt. Wie bei jedem Hebel wird dabei ein großer Hubweg bei einer geringen Kraft in einen kleinen Hub mit sehr großer Kraft umgesetzt. So wird bei kurzer Taktzeit ein sehr großer Druck im Siegelbereich aufgebaut.

In Ausführungsformen sind zwei Siegelhebel gespiegelt um eine gedachte Mittelachse, die durch die Mittenlinie der Schlitteneinheit verläuft, angeordnet. So kann nur durch die Linearbewegung des Schlittens an den Siegelhebeln die hohe Druckkraft aufgebracht werden.

In Ausführungsformen umfasst die Siegeleinheit ferner mindestens einen Sensor zur Erfassung von Prozessgrößen. Dies erlaubt eine exakte Überwachung der Prozessparameter, und gewährleistet somit eine hohe Qualität der Siegelnähte.

In Ausführungsformen ist der Sensor aus der Gruppe der folgenden Typen ausgewählt: Temperatursensoren, Drucksensoren, Abstandssensoren, optische Sensoren, kapazitive Sensoren oder andere geeignete Sensoren zur Prozessüberwachung. Diese Art von Sensoren erlaubt es alle für den Prozess notwendigen Siegelparameter zu überwachen.

In Ausführungsformen weist die Siegeleinheit ferner mindestens eine Steuer- und/oder Regel- und/oder Datenverarbeitungseinheit zur Erfassung und Verarbeitung von Sensordaten und zur Steuerung und/oder Regelung von Prozessgrößen auf.

In Ausführungsformen ist die Antriebseinheit ausgewählt aus der Gruppe elektrischer Antriebe, pneumatischer Antriebe, hydraulischer Antriebe, mechanischer Antriebe oder aus einer Kombination vorher genannter Antriebe. So können die Vorteile, welche jeder der verschiedenen Antriebe mit sich bringt, effektiv für die Aufgabe genutzt werden. Durch den elektrischen Antrieb kann die Bewegung der Kurbel und des daran angebundenen Schlittens präzise gesteuert werden. Durch die Pneumatik und die Hydraulik, kann die hohe Kraftübertragung in den Siegelbereich über die Siegelhebel aufgebracht werden.

In Ausführungsformen weist die Schlitteneinheit mindestens ein Rollenlager auf, welches eine stabile Kraftübertragung zur Wirkstelle der Siegelung gewährleistet.

In Ausführungsformen entsprechen die Rollenführungen einer V-Anordnung, um Exaktheit, Leichtgängigkeit und Robustheit zu gewährleisten. So erlaubt diese Anordnung die präzise Umsetzung der eingegebenen Prozessparameter.

In Ausführungsformen weist die Siegeleinheit keine federnden Elemente auf, um eine konstante Druckübertragung sicherzustellen. So wird gewährleistet, dass immer der gewünschte Druck im Siegelbereich der Siegelhebel aufgebracht wird.

In Ausführungsformen beträgt der Siegeldruck, aufgebracht durch das Kniehebelsystem, mindestens 1000 N. Dies ermöglicht eine hohe Siegelqualität bei gleichzeitiger niedriger Siegeltemperatur. So können auch temperaturempfindliche Verpackungsmaterial hochwertig versiegelt werden.

In Ausführungsformen weist der Siegelhebel ferner mindestens eine Aufnahme für das Siegelwerkzeug auf. Dies erlaubt die einfache Montage und Demontage von verschiedenen Siegelwerkzeugen, und so lassen sich unterschiedliche Siegelnähte einfach und schnell aufbringen.

Ein weiterer Aspekt der Erfindung betrifft ein Verfahren zur Verschweißung von Packstoffseiten einer Verpackung mittels einer erfindungsgemäßen Vorrichtung umfassend die Schritte: a) Konfigurieren von Prozessparametern, b) Einbringen der Packstoffseiten in das Siegelwerkzeug, c) Verschweißung durch das Siegelwerkzeug, d) entfernen der fertigen Verpackung.

In Ausführungsformen der Erfindung sind die Prozessparameter Siegeltemperatur und/oder Siegeldruck und/oder Siegelzeit.

In Ausführungsformen der Erfindung werden die Prozessparameter Siegeltemperatur und/oder Siegelzeit und/oder Siegeldruck geregelt.

Für die Realisierung der Erfindung ist es auch zweckmäßig, die vorbeschriebenen erfindungsgemäßen Ausgestaltungen, Ausführungsformen und Merkmale der Ansprüche miteinander zu kombinieren.

### Ausführungsbeispiele

Nachfolgend soll die Erfindung anhand eines Ausführungsbeispiels eingehender erläutert werden. Das Ausführungsbeispiel bezieht sich auf ein Verfahren / eine Vorrichtung zum Versiegeln von Verpackungsmaterialien und soll dabei die Erfindung beschreiben, ohne diese zu beschränken.

Anhand von Zeichnungen wird die Erfindung näher erläutert. Dabei zeigen
**Fig. 1** eine perspektivische Ansicht der Vorrichtung inklusive Siegelwerkzeug
**Fig. 2** eine Draufsicht der Vorrichtung, sowie die Hebelverhältnisse der Siegelhebel
**Fig. 3** eine perspektivische Ansicht des Siegelwerkzeuges
**Fig. 4** eine perspektivische Ansicht der Vorrichtung ohne Siegelwerkzeug

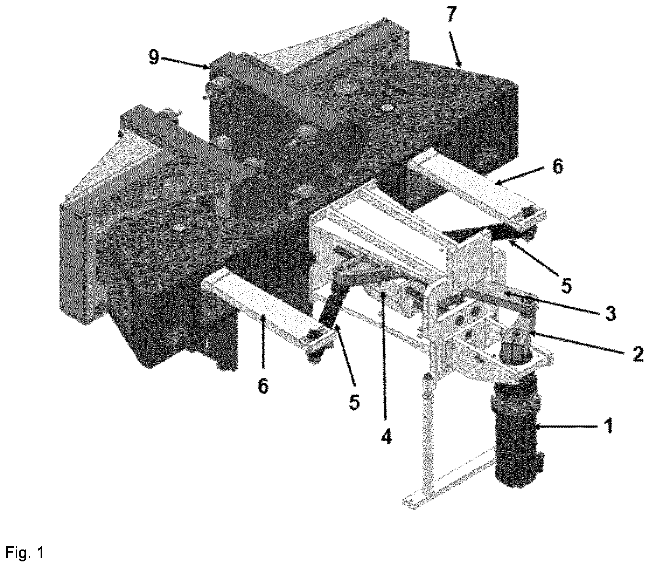

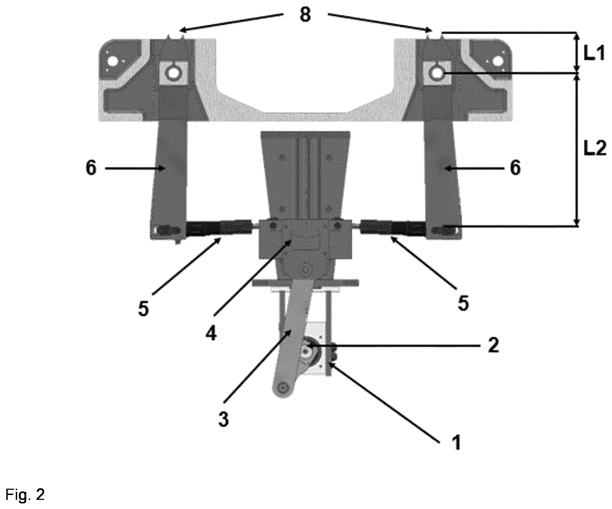

**Figur 1** zeigt in einem ersten Ausführungsbeispiel den Aufbau einer erfindungsgemäßen Siegelvorrichtung. Ein Antrieb 1 ist hauptverantwortlich für die Bewegung der Siegelhebel 6., wobei der Antrieb als Servomotor ausgebildet sein kann. Über eine Kurbel 2 und eine Koppel 3 ist der Antrieb mit einem Schlitten 4 verbunden. An dem Schlitten sind über eine gedachte Mittelachse gespiegelt, jeweils links und rechts zwei Zylinder 5 gelenkig gelagert. Die Zylinder 5 stellen die Verbindung zwischen Schlitten 4 und Siegelhebel 6 her. Die Siegelhebel sind wiederum in der Konsole 7 schwenkbar gelagert. Daraus resultiert das Hebelverhältnis L1/L2 am Siegelhebel (siehe Fig. 2). An Siegelhebeln angebunden ist das Siegelwerkzeug 9.

**Figur 2** zeigt die Siegelvorrichtung ohne das Siegelwerkzeug. Der Siegelhebelantrieb 1 führt an der Kurbel 2 eine reversierende Schwenkbewegung aus. Über die an der Kurbel 2 befestigte Koppel 3 führt der Schlitten 4 eine reversierende Linearbewegung aus. In die Siegelhebel 6 wird über die Zylinder 5 die Schließbewegung eingeleitet, was wiederum bei 8 in einer kurzen Linearbewegung der Siegelhebel 6 resultiert. Weiter wirken die Zylinder 5 als Regel- und Dämpfereinheit im System. Ohne diese Funktion würde bei durchgestrecktem Kniehebel die Kraft theoretisch gegen unendlich gehen. Diese Eigenschaft des Kniehebels wird genutzt, um an der Siegelstation die Siegewerkzeuge zunächst zügig an die Folie heranzuführen, während dem Verschweißen wird der Siegelvorgang schließlich mit geringer Geschwindigkeit, kurzem Hub und sehr hohem Druck ausgeführt. Um die auf die Komponenten der Siegelvorrichtung wirkende Kraft besser aufnehmen zu können, übernehmen die Hydraulik-Zylinder u.a. eine dämpfende Funktion. Weiter kann die über den Antrieb eingeleitete Kraft auf die Siegelhebel an den Zylindern gesteuert und geregelt werden. Aufgrund des Hebelverhältnisses L1/L2 kann entsprechend des Hebelgesetztes eine geringe Zug- oder Druckkraft mit großem Hubweg in einen kleinen Hubweg mit großer Kraft umgesetzt werden. Die Besonderheit der hier gezeigten Anordnung des Kniehebels liegt darin, dass sich das Übersetzungsverhältnis zwischen aufgewendeter Kraft zu resultierender Kraft während der Bewegung des Schlittens kontinuierlich verschiebt. Je näher die Zylinder in die Strecklage kommen, desto geringer ist die über die Kurbel und Koppel am Schlitten einzubringende Kraft. In einer besonderen Ausführungsform kann das Hebelverhältnis L2/L1 gleich 4 betragen.

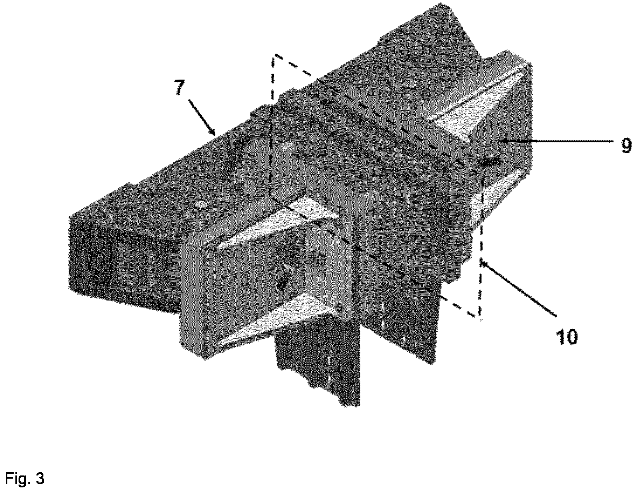

**Figur 3** zeigt das Siegelwerkzeug, welches an der Anlenkung der Siegelhebel befestigt werden kann. Weiter ist es verantwortlich für die Versiegelung der Verpackungsmaterialien. Mit der Bewegung der Siegelhebel werden die beiden Platten im Siegelbereich 10 aufeinandergedrückt und verschweißen so das dazwischen befindliche Verpackungsmaterial. Im Siegelbereich kann das Siegelwerkzeug auf eine Zieltemperatur erwärmt werden.

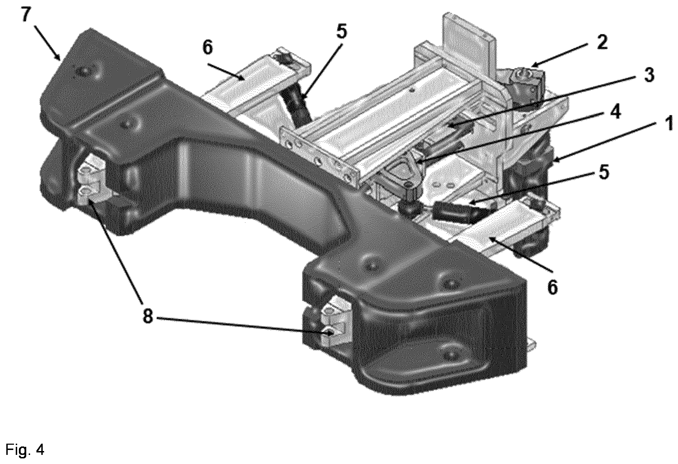

**Figur 4** zeigt die Siegelvorrichtung ohne das eigentliche Siegelwerkzeug. Das Siegelwerkzeug wird an 8 mit der Siegelvorrichtung verbunden. 8 stellt den Aufnahmepunkt des Werkzeuges an den Siegelhebeln 6 dar, welche wiederum in der Konsole 7 gelagert sind.

### Bezugszeichen

- 1: Antrieb (Servomotor)
- 2: Kurbel
- 3: Koppel
- 4: Schlitten
- 5: (Hydraulik-) Zylinder
- 6: Siegelhebel
- 7: Konsole
- 8: Anlenkung für Siegelwerkzeug
- 9: Siegelwerkzeug
- 10: Siegelbereich

## Patentansprüche

1. Vorrichtung zur Verschweißung von Packstoffseiten einer Verpackung umfassend eine Siegeleinheit zur Durchführung des Verschweißens unter einem Siegeldruck, wobei die Siegeleinheit ein Kniehebelsystem umfassend
- mindestens eine Antriebseinheit,
- mindestens eine Schlitteneinheit,
- mindestens ein Hydrauliksystem,
- mindestens einen Siegelhebel,
- sowie ein Gegenstück aufweist,
wobei die Siegeleinheit derart ausgestaltet ist, dass die Antriebseinheit mit der Schlitteneinheit derart verbunden ist, dass die Schlitteneinheit eine reversierende Linearbewegung ausführt und die Schlitteneinheit mit dem Siegelhebel über das Hydrauliksystem derart verbunden ist, dass eine Linearbewegung eines Siegelwerkzeugs, welches am Siegelhebel angeordnet ist, erzeugt wird, wobei ein Siegeldruck durch die definierten Bewegungen des Siegelhebels gegen das Gegenstück erzeugt wird, **dadurch gekennzeichnet, dass** die Siegeltemperatur und/oder die Siegelzeit und/oder der Siegeldruck derart einstellbar sind, dass die strukturelle Integrität der Packstoffe aufrechterhalten wird.

2. Vorrichtung zur Verschweißung von Packstoffseiten einer Verpackung nach Anspruch 1, **dadurch gekennzeichnet, dass** das Gegenstück als Siegelhebel ausgeführt ist.

3. Vorrichtung zur Verschweißung von Packstoffseiten einer Verpackung nach Anspruch 1 oder 2, **dadurch gekennzeichnet, dass** zwei Siegelhebel gespiegelt um eine gedachte Mittelachse, die durch die Mittenlinie der Schlitteneinheit verläuft, angeordnet sind.

4. Vorrichtung zur Verschweißung von Packstoffseiten einer Verpackung nach einem der Ansprüche 1 bis 3, **dadurch gekennzeichnet, dass** die Siegeleinheit ferner mindestens einen Sensor zur Erfassung von Prozessgrößen umfasst.

5. Vorrichtung zur Verschweißung von Packstoffseiten einer Verpackung nach Anspruch 4, **dadurch gekennzeichnet, dass** der Sensor aus der Gruppe der folgenden Typen ausgewählt ist: Temperatursensoren, Drucksensoren, Abstandssensoren, optische Sensoren, kapazitive Sensoren oder andere geeignete Sensoren zur Prozessüberwachung.

6. Vorrichtung zur Verschweißung von Packstoffseiten einer Verpackung nach einem der Ansprüche 1 bis 5, **dadurch gekennzeichnet, dass** die Siegeleinheit ferner mindestens eine Steuer- und/oder Regel- und/oder Datenverarbeitungseinheit zur Erfassung und Verarbeitung von Sensordaten und zur Steuerung und/oder Regelung von Prozessgrößen aufweist.

7. Vorrichtung zur Verschweißung von Packstoffseiten einer Verpackung nach einem der Ansprüche 1 bis 6, **dadurch gekennzeichnet, dass** die Antriebseinheit ausgewählt ist aus der Gruppe elektrischer Antriebe, pneumatischer Antriebe, hydraulischer Antriebe, mechanischer Antriebe oder aus einer Kombination vorher genannter Antriebe.

8. Vorrichtung zur Verschweißung von Packstoffseiten einer Verpackung nach einem der Ansprüche 1 bis 7, **dadurch gekennzeichnet, dass** die Schlitteneinheit mindestens ein Rollenlager aufweist, welches eine stabile Kraftübertragung zur Wirkstelle der Siegelung gewährleistet.

9. Vorrichtung zur Verschweißung von Packstoffseiten einer Verpackung nach Anspruch 8, **dadurch gekennzeichnet, dass** die Rollenführungen einer V-Anordnung entsprechen, um Exaktheit, Leichtgängigkeit und Robustheit zu gewährleisten.

10. Vorrichtung zur Verschweißung von Packstoffseiten einer Verpackung nach einem der Ansprüche 1 bis 9, **dadurch gekennzeichnet, dass** die Siegeleinheit keine federnden Elemente aufweist, um eine konstante Druckübertragung sicherzustellen.

11. Vorrichtung zur Verschweißung von Packstoffseiten einer Verpackung nach einem der Ansprüche 1 bis 10, **dadurch gekennzeichnet, dass** der Siegeldruck, aufgebracht durch das Kniehebelsystem, mindestens 1000 N beträgt.

12. Vorrichtung zur Verschweißung von Packstoffseiten einer Verpackung nach einem der Ansprüche 1 bis 11, **dadurch gekennzeichnet, dass** der Siegelhebel ferner mindestens eine Aufnahme für das Siegelwerkzeug aufweist.

13. Verfahren zur Verschweißung von Packstoffseiten einer Verpackung unter Verwendung einer Vorrichtung nach einem der Ansprüche 1 bis 12, umfassend die Schritte:
a) Konfigurieren von Prozessparametern,
b) Einbringen der Packstoffseiten in das Siegelwerkzeug,
c) Verschweißung durch das Siegelwerkzeug,
d) Entfernen der fertigen Verpackung.

14. Verfahren zur Verschweißung von Packstoffseiten einer Verpackung nach Anspruch 13, **dadurch gekennzeichnet, dass** die Prozessparameter Siegeltemperatur und/oder Siegeldruck und/oder Siegelzeit sind.

15. Verfahren zur Verschweißung von Packstoffseiten einer Verpackung nach Anspruch 13 oder 14, **dadurch gekennzeichnet, dass** die Prozessparameter Siegeltemperatur und/oder Siegelzeit und/oder Siegeldruck geregelt werden.
